Europäisches Patentamt

European Patent Office

Office européen des brevets

(11) Publication number: **0 203 538**
A2

# EUROPEAN PATENT APPLICATION

(21) Application number: **86106987.0**

(22) Date of filing: **22.05.86**

(51) Int. Cl.⁴: **G 02 B 6/44**, A 01 B 11/00

(30) Priority: **29.05.85 IT 2094385**

(43) Date of publication of application: **03.12.86**
Bulletin 86/49

(84) Designated Contracting States: **CH DE FR GB LI LU NL SE**

(71) Applicant: **Società Cavi Pirelli S.p.A., Piazzale Cadorna 5, I-20123 Milan (IT)**

(72) Inventor: **Gazzana Priaroggia, Paolo, Piazza S. Ambrogio 8, Milan (IT)**

(74) Representative: **Mariani, Giorgio, Dr. et al, INDUSTRIE PIRELLI S.p.A. Direzione Brevetti Piazzale Cadorna, 5, I-20123 Milano (IT)**

(54) **Submarine cable for optical-fibres telecommunications.**

(57) A submarine optical-fibres telecommunications cable according to the invention, incorporates a metallic rope (1) in the radially innermost position. Around the rope (1) which constitutes the armouring of the cable, there are helically wound a plurality of conductors (4) and a plurality of tubes (5) wherein optical-fibres (6) are loosely housed.

A layer (8) of plastic material – constituting the cable's sheath, covers the tubes (5)-conductors (4) complex, and englobes the same, in correspondence of the radially innermost surface of the sheath.

SUBMARINE CABLE FOR OPTICAL-FIBRES TELECOMMUNICATIONS

Description

The present invention  refers to a submarine  optical-fibres cable for telecommunications - of the type that incorporates electric conductors for feeding the optoelectronic repeaters of the transmitted signals.

The known optical-fibres  submarine cables, present a sheath and  a mechanically-resistent armouring, formed out of steel wires, surrounding an optical core  constituted by a profile provided,  on its outer surface,  with grooves, wherein the optical-fibres are housed.

The electrical conductors incorporated in the known  cables, are  copper,  or aluminium wires,  and such like,  that are introduced  into the mechanical-resistent  armouring  -  in substitution of some steel wires forming it.

Seeing  that copper, alluminium and such like,  have a lower mechanical-resistance - as compared to that of  steel,  the dimensions  of  the  cable armouring must be increased,  for compensating the lesser mechanical-resistance of  the  wires made of copper  and such like,  that are present in them.

The  increase in the dimensions of the armouring, that takes place  owing to the necessity of having more material  added outside the cable's optical-core - and hence,  in a position further away  from the cable's longitudinal axis -  that  is also the neutral axis of flexion,  causes the cable's rigidity to be increased.

For obviating the above,  it has already been  proposed  to utilize  -  as an electrical conductor, incorporated in the cable,  the profile of the optical-core - by  realizing  the said profile out of a metallic material with a high electrical conductibility, such as copper, aluminium and such like.

The drawback of this known solution - lies in the need for making the grooves, that are intended for housing optical-fibres, through working the metallic profile by machine - which prove both, complex and difficult.

Examples of known submarine optical-fibres cables, of the type in question, are described in the U.K. PATENT No. 2.021.282.

Another drawback of the known optical-fibres cables incorporating electrical conductors, consists in the difficulty had when realizing the connections between the conductors and between the optical-fibres - during the execution of cable-joints and when connecting optical-fibres cables to the optoelectronic repeaters of the signals transmitted by the said optical-fibres.

The reason for these difficulties is due, not only to the presence of a mechanically-resistent armouring around the optical-fibres - but also to the fact that the conductor overlies the optical-fibres, or vice-versa.

For example, in the instance wherein the conductors are incorporated in the armouring, a connection - between the optical-fibres results as being obstaculated by the presence in an overlying position of the conductors or of the connections between these latter - if this is already effectuated.

Even in the instance when the conductor is the profile constituting the optical core of the cable, the execution of the connection between the optical-fibres can be hampered by the presence of the already executed connections between the conductors - coming from the optoelectronic repeaters and the profile constituting the cable conductor.

On considering that whenever connections - and in particular connections between optical-fibres requiring a considerable accuracy and precision of execution, are difficult to carry- out, they prove to be quite unreliable, from this it results that an insufficient reliability exists also for the known optical-fibres cables incorporating electrical conductors.

Other drawbacks in the known submarine optical-fibres cables are their heavy weight and their considerable flexional rigidity - which render the cable-laying, and/or the cable-raising operations to be difficult.

The aim of the present invention is a submarine optical-fibres cable of the type incorporating electrical conductors - for example, used for feeding optoelectronic repeaters, that is devoid of the drawbacks given above.

What forms the object of the present invention is a submarine optical-fibres telecommunications cable, that comprises a mechanically-resistent armouring, a sheath that encloses a plurality of optical-fibres and conductors - for feeding the optoelectronic repeaters of the signals transmitted by the latter, characterized by the fact that the mechanically-resistent armouring is a compact, anti-torsional rope having the spaces between the component wires filled with a practically incompressible fluid, positioned in the radially innermost zone of the cable, that a plurality of conductors and a plurality of tubes - filled with an incompressible fluid and loosely housing at least one optical-fibre, are wound helically around the rope, at least one electrical conductor being interposed between pairs of adjacent tubes and that one layer of plastic material, covers the 'tubes-conductors' complex, englobing them in correspondence of its own radially innermost surface, with the spaces between the 'tubes-conductors' complex and the rope, that are not occupied by the plastic material, being filled with an incompressible fluid.

By the term incompressible fluid in this text, are intended liquid substances - preferably viscous, even having a high viscosity; gases are ex- cluded by this term.

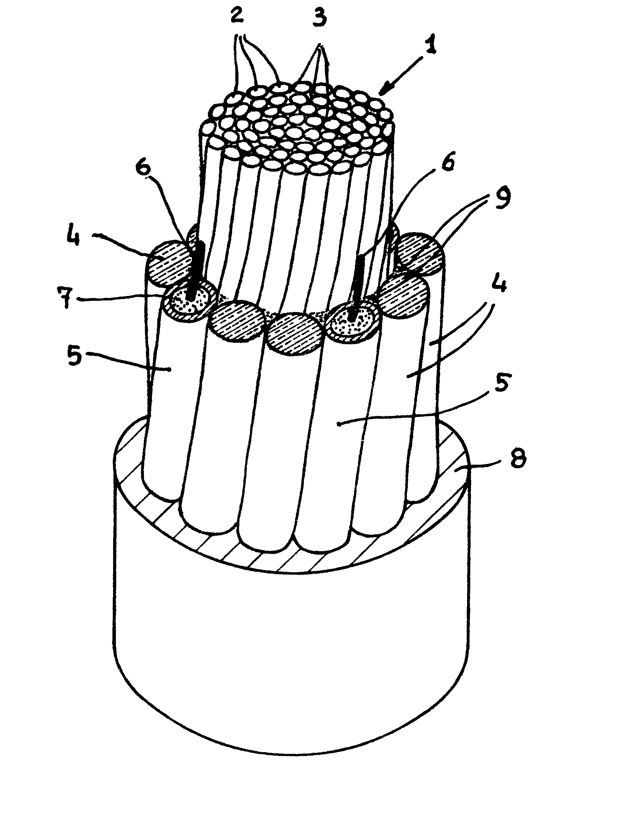

The present invention will be better understood from the following detailed description, made solely by way of nonlimiting example - with reference to the figure in the attached drawing TABLE - that shows a perspective view of a cable length, according to the invention, with parts removed for better pointing out the structure.

As can be seen in the figure, the cable presents an armouring comprised by a compact antitorsional rope 1, which occupies the radially innermost position.

The rope 1 is dimensioned so as to substantially resist the tractional stresses exercised during the cable-laying, or the cable-raising operations.

The rope 1, is formed by a plurality of wires 2 made out of a material with a high mechanical-resistence to stresses - for example: steel, aromatic polyamids, carbon fibres, and such like.

Moreover, the spaces 3 existing between the wires 2, are filled with a practically incompressible fluid, for example: a silicone grease, a petroleum jelly, and such like.

Around the rope 1 there are helically wound conductors 4 - for example: made of copper or aluminium, and plastic or metallic tubes 5 - forming a single crown.

The helicoidal windings of the conductors 24 and of the tubes 5, can be either closed-helix or open-helix - intending by the latter terms that the lay-out of the conductors 4 and of the tubes 5 is constituted by S-shaped lengths alternated by Z-shaped lengths.

The tubes 5, loosely house at least one optical fibre 6, and are filled with an incompressible fluid 7 - for example: silicone grease, a petroleum jelly, and suchlike.

The conductors 4 can either have greater diameters, or lesser diameters than the outer diameter of the tube 5.

Preferably, the conductors 4 have a diameter that is equal to the outer diameter of the tubes 5. For example, the diameter of the conductors and the outer diameter of the tubes, is comprised between 1.8 mm and 3 mm.

Still by way of example, the tubes 5 have an internal diameter that is comprised between 0.75 mm and 1.5 mm — and their wall-thickness is chosen as a function of the degree of filling with an incompressible fluid, of the tubes themselves.

The tubes 5 and the conductors 4 are in reciprocal contact and they are also in contact with the rope 1 — with forming a crown around it.

More particularly, each tube 5 is adjoined by two conductors, and lies in contact with them.

In the figure, it can be seen that two conductors 4, are interposed in-between pairs of adjacent tubes 5 — but this fact has not to be taken in any limiting sense. In fact, the conductors, interposed between pairs of adjacent tubes 5, can be of any whatsoever number — that cannot be equal for all the pairs of tubes. What matters, is for each tube to be adjacent to and in contact with two conductors — that hence, act also as a support for the walls of the tubes.

Over the crown formed by the tubes-conductors complex, there is present a plastic layer 8, that is obtained through extrusion — for example: of a polyolefin — such as polyethylene, or of polyvinyl chloride, or of nylon, and suchlike.

The layer 8 forms the cable sheath. As an alternative, over the layer 8, there can be disposed a watertight metallic sheath (not shown), whose thickness is in the order of some tens of milimeters - and it does not vary with the laying depth for which the cable is intended.

On the outermost surface of the cable, can be disposed the usual anti-corrosive protections - that are normally adopted in submarine cables.

The radially innermost surface of the layer 8, couples with the radially outermost surface of the tubes 5-conductors 4 complex and penetrates through them - with filling the spaces 9 existing between the tubes 5-conductors 4 complex and rope 1.

As an alternative (as shown in the figure), the spaces 9 are filled-up with the same incompressible fluid with which are filled the spaces 3 that exist between the wires 2, of the rope 1.

In this case, the radially innermost surface of the layer 8 is limited to shifting the radially outermost surface of the tubes 5-conductors 4 complex.

The thickness of the layer 8 can be any whatsoever, but preferably, it is not lesser than 2 mm for better resisting any formation of arborescences that could appear therein.

In fact, in a cable according to the invention, the return-conductor for the direct current feeding the optoelectronic repeaters, is formed by the sea.

Under this condition, in being interposed between the conductors 4 and the sea - which acts as a return-conductor, the plastic layer 8 forming the cable sheath, results as being subjected to electrical stresses.

From the description given above and from the considerations that will follow, it can be understood that with a cable according to the invention, the aims proposed can be achieved.

In cables - according to the invention, the execution of joints and the connection with optoelectronic repeaters of the signals transmitted by the optical-fibres, results as being made easier.

In fact, in the cables according to the invention, there do not exist any armourings - surrounding the tubes 5 and the conductors 4, that could obstaculate the connecting operations.

Moreover, the tubes 5 and the conductors 4 are adjacent to each other - and this prevents any reciprocal obstaculation during the execution of the two types of connections - all to the advantage of the reliability of these connections and hence, of the cables in their complex whole.

The facility in executing the joints and the connection with the repeaters is maximum - whenever the spaces 9, existing between the tubes 5-conductors 4 complex, are filled-up with an incompressible fluid - since this solution facilitates the removal of a part of the sheath or layer 8 from the cables - which is necessary for the purpose of carrying-out these operations.

In the cables according to the invention, the tubes housing the optical-fibres, result as being correctly disposed around the armouring and stably in position on the latter - due to the presence of conductors 4 that preferably, have a diameter that is equal to that of the tubes that are adjacent to them and in contact with them. This means that during the formation - through extrusion of the plastic sheath 8, any alterations in the configuration of the tubes 5 are excluded. The correct disposition of the tubes and the conductors, contributes towards facilitating the execution of the joints, and the connections with the optoelectronic repeaters.

The cables, according to the invention, also have a weight reduced to the minimum, as well as the maximum of flexibility.

In fact, the prevision of a mechanically-resistent armouring consisting of a compact antitorsional rope disposed in the cable's radially innermost zone and dimensioned for resisting tractional stresses - during the cable-laying, or the cable-raising operations, means a minimum weight for the cable.

Moreover, the rope forming the cable armouring, has its own axis coinciding with the cable axis - that represents for it the neutral axis of flexion, and the electrical conductors of the cable are in contact with it.

Hence, the wires forming the rope and the conductors, are at the minimum distance possible from the neutral axis of the cable - and this fact signifies having cables with the maximum of flexibility.

Moreover, the presence of the conductors 4, that are solid metallic bodies resting on the compact rope 1, adjacent to and in contact with the tubes 7, give support to the tube-walls and allow for having a protection for these tubes and for the optical-fibres housed inside them, from the inevitable impacts that the cable undergoes - during cable-laying and/or cable-raising operations - in spite of the absence (considered to be indispensable in known submarine cables) of a mechanically-resistent armouring, disposed to surround the cable zone wherein the optical-fibres to be protected, are present.

The cables, according to the invention, (in spite of the absence of any whatsoever mechanically-resistent armouring surrounding the zone wherein the optical-fibres are positioned) besides protecting the latter - for the above-given reasons, from the impacts they encounter during the laying operation also present an excellent resistence to hydrostatic pressure no matter what the laying-depth may be - owing to the fact that no voids, unfilled with material, exist in the cables.

Although a particular form of realization for a cable - according to the invention, has been illustrated and described, what are also intended as being comprised within its ambit are all those possible alternative variations that are accessible to one skilled in the art.

# C L A I M S

1.      Submarine optical-fibres telecommunications cable, that comprises a mechanically-resistent armouring, a sheath that encloses a plurality of optical-fibres and conductors for feeding the optoelectronic repeaters of the signals transmitted by these latter, characterized by the fact that the mechanically-resistent armouring is a compact, antitorsional rope (1), having the spaces (3) between the component wires (2) filled-up with a practically incompressible fluid, positioned in the radially innermost zone of the cable, that a plurality of conductors (4) and a plurality of tubes (5) - filled with an incompressible fluid and loosely housing at least one optical-fibre (6), are wound helically around the rope (1), at least one electrical conductor (4) being interposed between pairs of adjacent tubes (5) and that one layer (8) of plastic material, covers the tubes(5)-conductors(4) complex englobing them in correspondence of its own radially innermost surface, with the spaces between the tubes(5)-conductors(4) complex and the rope (1) that are not occupied by the plastic material, being filled with an incompressible fluid.

2.      Submarine optical-fibres telecommunications cable according to CLAIM 1, characterized by the fact that each tube (5) adjoined by two conductors (4), is in contact with them.

3.      Submarine optical-fibres telecommunications cable, according to CLAIM 2, characterized by the fact that the conductors (4) have their diameter equal to the outer diameter of the tubes (5).

4.      Submarine optical-fibres telecommunications cable, according to CLAIM 1, characterized by the fact that each space existing between the tubes(5)-conductors(4) complex and the compact antitorsional rope (1) forming the cable armouring, is filled with the same, substantially incompressible fluid that fills-up every space (3) between the component wires (2) of said rope (1).